# EUROPEAN PATENT APPLICATION

(11) **EP 1 382 277 A2**
(43) Date of publication of application: **21.01.2004**
(21) Application number: 02024104.8
(22) Date of filing: 29.10.2002
(51) Int. Cl.: A47F 10/06

(54) **Gastronomic table for serving out food**

(30) Priority: 17.07.2002 BE 200200446; 17.07.2002 BE 200200447
(71) Applicant: De Maeyer, Marc, 9120 Beveren (BE)
(72) Inventor: De Maeyer, Marc, 9120 Beveren (BE)
(74) Representative: Bird, William Edward

(57) **Abstract**

A table (1) for serving out food is described, which has a first working surface (3). The first working surface (3) comprises a transferring device, e.g. at least one conveyor belt (6, 7) for transferring food receptacles from one end of the table (1) to an opposite end of the table (1). The table (1) is provided with a drive unit (57) for moving the table (1) from a first working position (A) between floor (59) and ceiling (42) of a room, to a second non-working position (B) at a higher level between the floor (59) and ceiling (42) of the room than the first position (A). The table (1) may thereby expose a second working surface (58).

## Description

### Technical field of the invention

The present invention relates to a removable table for serving out food and a method of operating the same.

### Background of the invention

A table for serving out food is a table, which is used for systematically arranging or garnishing food on plates or dishes.

It is known that such tables for serving out food are often used in the field of catering, for example in big restaurants where in a short period of time a large number of plates need to be served out substantially equally. Tables for serving out food mainly consist of large tables, alongside which a plurality of persons can position themselves, generally standing, and across which plates or dishes are systematically moved by hand from one end to the other. Each person standing alongside the table carries out one of the required or desired acts of serving out food and pushes the plate or dish towards the next person.

Usually these tables should be as long as possible, in order to be able to fill a lot of plates or dishes in a short time period. However, the use of these tables is almost only necessary at the moment when the plates or dishes need to be prepared. At other times, such large tables may be seen as cumbersome because they take up space in the kitchen when they are not needed.

From US-4216845 is known a circular food service conveyor. It comprises two spaced-apart box-like pedestals supporting, from underneath at each end, a conveyor table top member. Upper and lower food holding shelves are supported in spaced relation above a central portion of the conveyor table top. The conveyor table top comprises tracking and drive means for and articulated conveyor belt, which travels flat-wise in an elongated circular path upon the upper surface of the table top member. The conveyor unit is provided with wheels for rolling portability. It is a disadvantage of the circular food service conveyor that it is cumbersome. Even when rolled aside, the food service conveyor still takes up the same amount of floor space.

Furthermore, in kitchens there is a problem of food poisoning from contaminated food exists and is serious: millions of persons get ill and thousands die each year from this cause. Food poisoning is due to pathogens, e.g. bacteria, which are delivered in hotels and restaurants on consumer's plates. Some of these pathogens are dangerous: for example the bacteria Escherichia coli strain 0157 is potentially untreatable and may lead to renal failure, brain damage and death. Transfer of these bacteria takes often place by cross-contamination from contaminated meat to uncooked vegetables. It is therefore very important to keep kitchens and kitchen material as clean as possible and to disinfect kitchen material on a regular basis.

### Summary of the invention

It is an object of the present invention to provide a table for serving out food that does not take up space the kitchen at times when it is not in use.

It is a further object of the present invention to provide a table for serving out food that is easy to clean and disinfect.

The above objectives are accomplished by a table for serving out food according to the present invention.

A table for serving out food according to the present invention has a first working surface, wherein the first working surface comprises a transferring device for transferring food receptacles from one end of the table to an opposite end of the table. The table is provided with a drive unit for moving the table from a first working position between floor and ceiling of a room, to a second non-working position at a higher level between the floor and ceiling of the room than the first position. The table may thereby expose a second working surface.

The transferring device may comprise at least one conveyor belt, for example two conveyor belts adjacent each other.

The table may furthermore comprise a bearing structure with fastening means for fastening the table to the ceiling or a wall of the room. The bearing structure may comprise at least one telescopic tube, preferably at least two telescopic tubes.

The table may furthermore comprise cleaning means for cleaning the first working surface. The cleaning means may comprise a mechanical surface cleaning means such as a scraping device for scraping food from the first working surface.

The table may furthermore comprise disinfecting means for disinfecting the first working surface, for example a UV radiation unit or a disinfectant spraying unit.

The table may furthermore comprise light sources so as to illuminate the second surface when being in the second non-working position.

The table may also comprise at least one heating unit for heating at least part of the first working surface.

The present invention also includes a method for serving out food using a table having a first working surface, comprising the steps of transferring food receptacles along a path from one end of the table to an opposite end of the table on the first working surface and serving out food into the receptacles at stations along the path, and moving the table from a first working position between floor and ceiling of a room, to a second non-working position at a higher level between the floor and ceiling of the room than the first position to thereby expose a second working surface.

These and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Fig. 1 is a front view of an embodiment of a table for serving out food according to the present invention, which is made partially transparent.
Fig. 2 is a top view of the table of Fig. 1.
Fig. 3 is a side view of the table of Fig. 1, the left hand side of Fig. 3 being a side view with the table in a non-working position and the right hand side of Fig. 3 being a side view with the table in a working position.
Fig. 4 is a side view illustrating the mounting of a heating unit..
Fig. 5 is a vertical cross-section of a conveyor belt.
Fig. 6 is an illustration of the racks used for supporting the conveyor belts.
Fig. 7 is a cross-sectional front view of part of the table containing the drive mechanism for a conveyor belt.
Fig. 8 is a top view of the drive mechanism of Fig. 7.
Fig. 9 is a side view of the drive mechanism of Fig. 7.
Fig. 10 is a cross-sectional front view of the table containing the tightening mechanism of the conveyor belt.

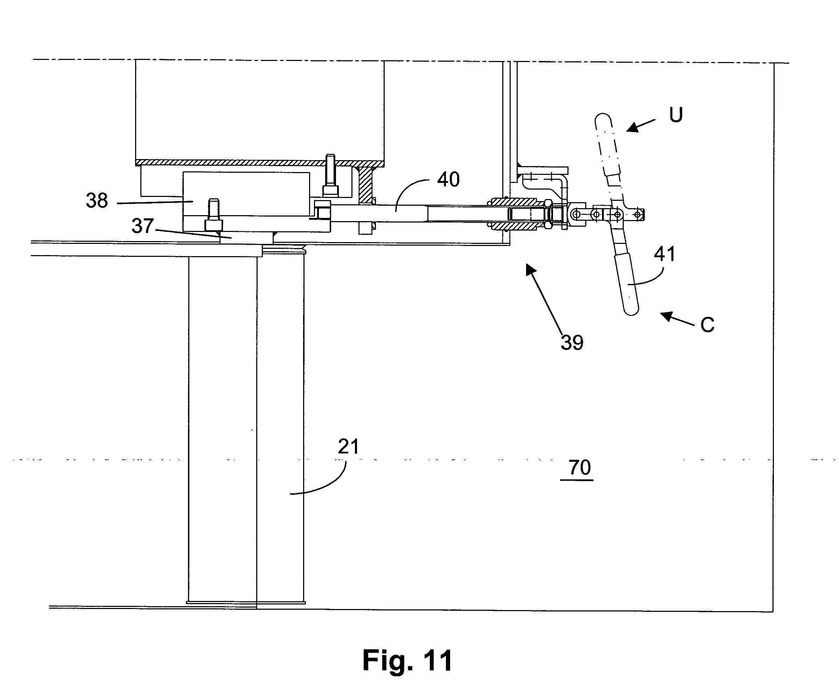

Fig. 11 is a top view of the tightening mechanism of Fig. 10.
Fig. 12 illustrates the suspension of the table from the ceiling.
Fig. 13 illustrates one embodiment of a drive system for driving the up and down movement of the table.
Fig. 14 illustrates a detail of the suspension of Fig. 12 in two different states (table being up resp. down).

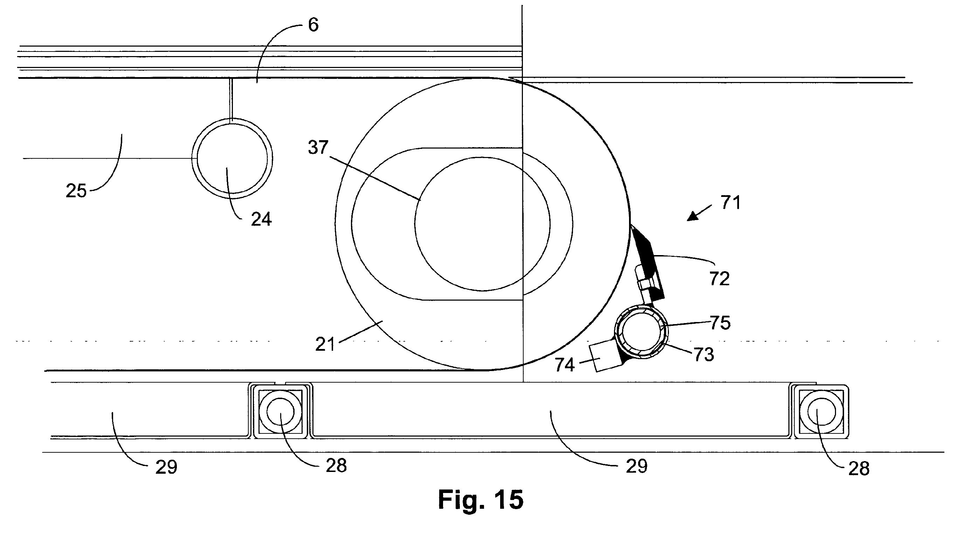

Fig. 15 illustrates an embodiment for cleaning the conveyor belt.

In the different figures, the same reference figures refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

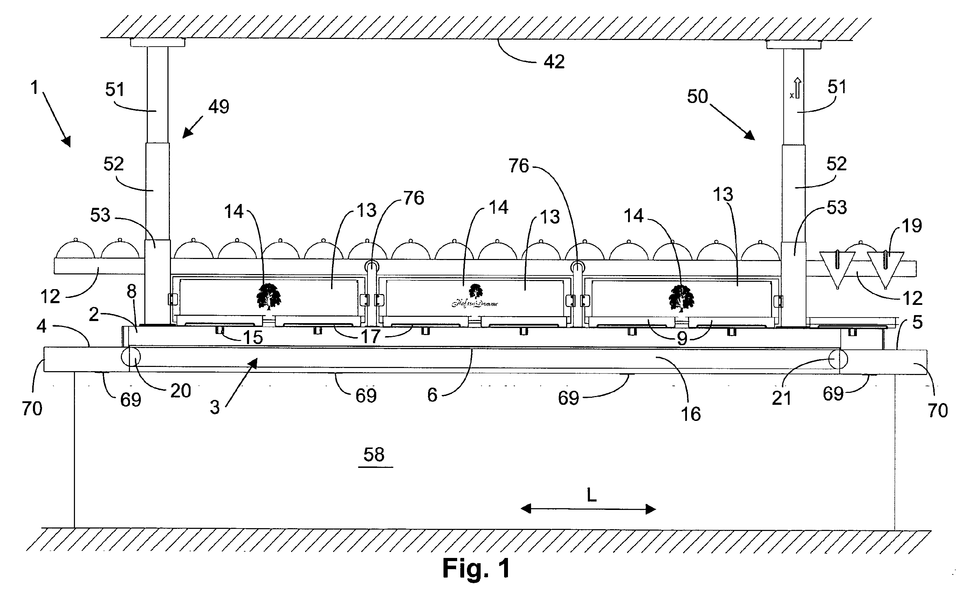

Fig. 1, Fig. 2 and Fig. 3 respectively show a front view, a top view and a side view of a table 1 for serving out food according to the present invention. In an aspect of the present invention, the table 1 for serving out food has a working surface 3, whereby the working surface 3 comprises a transferring device 6, 7 for example for transferring plates from one end of the table 1 to an opposite end of the table 1. It is to be understood that with "plates" is meant any kind of food receptacles, such as plates, bowls, cups, dishes and others. The front view of Fig. 1 is made partially transparent, so as to show the position of a transferring device 6 in the table 1. Alternatively, food or meals can be directly prepared on the transferring device 6, 7. The surface of the transferring device 6, 7 preferably comprises stainless steel, which is very suitable for use in a kitchen, and which may be brought in contact with food without any problem. The preparation of food directly on the transferring device is very useful when for example preparing big salvers or trays, where each person carries out one act to the food. At the end of the transferring device, whatever is made is ready and can be placed on the salver. Also for making Chinese egg-rolls for example, the transferring device can be used that way: a first person places a sheet of dough on the transferring device, this sheet is moved towards a second person who puts vegetables and meat onto it, after which it is moved towards a third person who closes the egg-roll and places it on a tray. The fact of carrying out each time only one or a limited number of actions, and always the same, without having to bother about the displacement of the food, leads to a very fast and efficient way of working.

The table 1 is provided with a drive unit 57 for moving the table 1 from a first working position (A) between a floor 59 and a ceiling 42 of a room, e.g. a kitchen, to a second non-working position (B) at a higher level between the floor 59 and ceiling 42 of the room than the first position (A). A motor for the drive unit 57 is preferably located in a position so that the thickness of the table 1 in the vertical direction is kept small. The transferring device 6,7, is preferably a conveyor belt. The conveyor belt has a drive motor and the conveyor belt and its motor are preferably located in a position approximately at the same height to form a slab-shaped table 1 rather than box-shaped. A motor for the drive unit 57 is also preferably located in a position approximately at the same height as the transferring device to form a slab-shaped table 1 rather than box-shaped. The vertical displacement of the table 1 frees up a space under the table when in the upper position, which can be used for other activities.

For example, table 1 for serving out food according to the present invention comprises a central unit 2, a working surface 3, and two waiting areas 4, 5. The central unit 2 is a hollow tube with a substantially rectangular cross-section, which may be formed, for example, by welding together, preferably by continuous welding or by spot-welding, two profiles with a substantial U-shape. The central unit 2 extends substantially over the length of the table 1 for serving out food, except for the waiting areas 4, 5. The central unit 2 is substantially closed from the environment.

The working surface 3 has a transferring surface for transferring plates from one end of the table to an opposite end of the table 1, in a longitudinal direction L (in either of the senses), or from one waiting area 4 resp. 5 to the other waiting area 5 resp. 4. The transferring surface may be a surface on which plates are manually pushed from one location to another. However, and preferably, the transferring surface comprises automated devices for transferring the plates, e.g. a robot or similar. For example, in the example shown in the drawings the transferring surface comprises two conveyor belts 6, 7 for conveying plates in longitudinal direction L of the table, the conveyor belts 6, 7 being placed adjacent each other in transverse direction T, each along one side of the central unit 2. The conveyor belts 6, 7 may be made from any material which is suitable for use in a kitchen and which is easy to clean, such as for example a belt of which at least the outer surface consists of stainless steel, of which the extremities are connected, for example welded together by laser-welding, so as to form an endless belt. In a practical embodiment, the conveyor belt 6, 7 may consist of a thin sheet of stainless steel, for example having a thickness of about 0.3 mm. By using a conveyor belt 6, 7 of stainless steel, the table 1 has the advantage that the working surface 3 is very suitable for being used in kitchens, for the use of stainless steel is hygienic. A surface of stainless steel can easily be cleaned. The working surface 3 has a limited height, for example is about 12 cm high.

The use of an automated transferring surface has the advantage that plates do not hit each other, which often happens when plates are manually shifted from one location to another by pushing them away, and that therefore less plates get damaged during serving out food.

Preferably, the central unit 2 does not extend more than 50 cm, preferably not more than 20 cm above the working surface 3. The top side 8 of this central unit 2 can be used to put dishes 9 with food ingredients upon. Alternatively, brackets 15 may be provided, for example fixed on the side wall 16 of the central unit 2, into which supporting means 17 for supporting dishes 9 can be clipped. These brackets 15 are preferably made from supple plastic materials or from stainless steel. They can for example be fixed on the side wall 16 of the central unit 2 by welding or by screwing. The dishes 9 contain the ingredients for the meal to be served out. Having dishes 9 close to the conveyor belts 6, 7 has the advantage that the ingredients to be used are readily available. If the central unit 2 is not too high, the ingredients can be taken from the dishes and put on a passing plate with a small movement of the hand. The top surface 8 of the central unit 2 may be relatively small, while, however, big dishes 9 can be placed onto it, because it is no problem if the dishes 9 extend over the edge of the central unit 2 and over the conveyor belts 6, 7, without hindering the movement of the plates on the conveyor belts 6, 7.

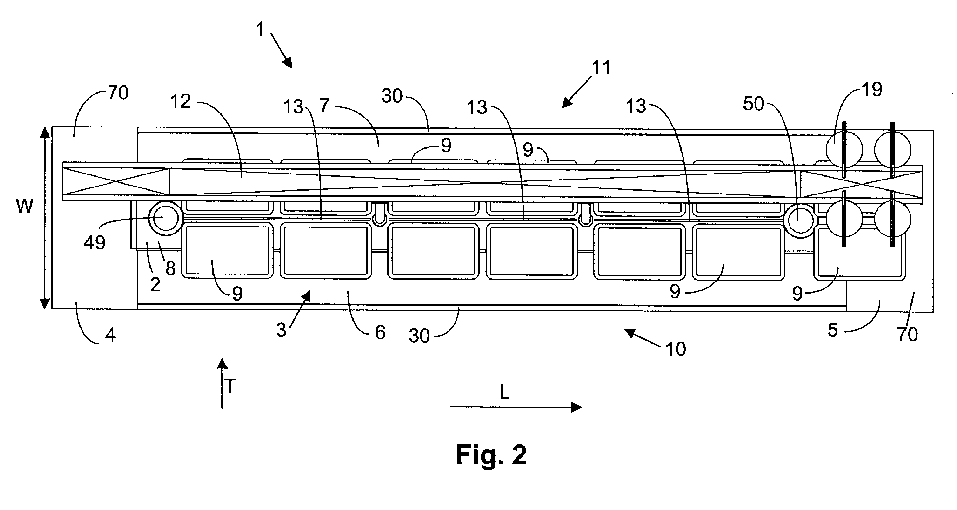

In the table 1 as represented in Fig. 2, the working surface 3 is divided into two parallel units 10, 11, each provided with a transferring device, a conveyor belt 6, 7 in the embodiment represented. One of the units, 10, is provided for serving out cold meals, while the other unit, 11, is provided for serving out either cold or hot meals. This second unit 11 is provided therefor with a heating unit 12 above this second unit 11, which heating unit 12, when switched on, keeps the dishes 9 and the food therein as well as the plates and the food placed thereon hot, which plates are put on the conveyor belt 7. The heating unit 12 may for example comprise infra-red (IR) heating devices. The purpose of the heating devices is not necessarily to warm up plates and the food thereon, but to prevent that they cool down.

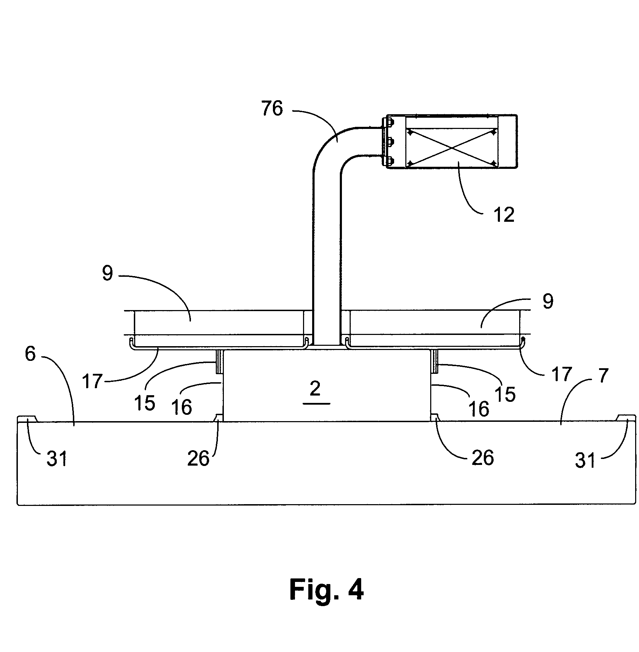

The heating unit 12 may be provided in the middle of the transversal width of table 1, so as to keep food on plates and dishes 9 warm at either side of the central unit 2, or it may be provided just on one side, if a hot and a cold section 10, 11 are provided. The mounting of a heating unit 12 on one side of the central unit 2 is illustrated in Fig. 4. The heating unit 12 is supported by supporting pillars 76, preferably curved supporting pillars. Generally the heating unit 12 will comprise three or four heating devices, each of which can be switched on or off individually, depending on the need of it being used. Temperature can be controlled by means of a potentiometer on a control panel.

Heating devices (not represented in the drawings) may also be incorporated in the central unit 2, in order to keep its upper side 8 hot when dishes 9 are put thereon for serving out hot meals. Alternatively, cooling means (not represented in the drawings) may be provided, in order to keep the central unit's 2 top side 8 cool when dishes 9 are put thereon for serving out cold meals or desserts.

Between both units 10, 11, a wall 13 may be provided so as to effectively separate the hot unit 11 from the cold unit 10. This wall 13 may be made from any suitable material, such as glass for example, and may bear some marks or signs 14 applied onto the wall by fixing, screwing, gluing, painting, writing, engraving, etc. This wall may prevent transfer of materials from the cold to the hot side and vice versa, thus preventing cross-contamination of food. According to another embodiment, not represented in the drawings, no wall may be provided between both sides of the table 1, and one person, standing at one side of the table 1 may handle food on both transferring surfaces 6, 7. This is possible due to the small width W of the table 1, for example about 1 meter, so that a person standing at one side of the table 1 is able to reach the opposite side.

Before and after the transferring surface 6, 7, seen in the direction of movement of the plates, a first, respectively a second waiting area 4, 5 is provided. On the first waiting area 4, for example, empty plates may be gathered, ready for being served out. The first person at the serving out table 1 takes an empty plate from a stack on the waiting area 4, and starts the process of serving out food. At the second waiting area 5, completed plates are gathered, ready for being taken away by waiters and waitresses for being served to the customers.

A seamless rack 18 may be provided, e.g. at a side wall of the heating unit 12 above the second waiting area 5, onto which sauce dispensers 19 may hang, as well as possibly other accessories.

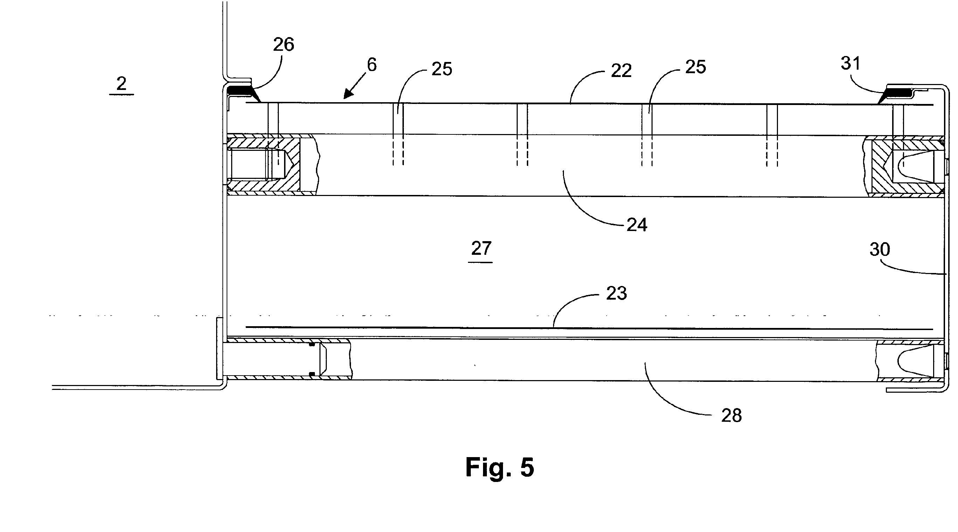

A vertical cross-section of a part of the table 1 can be seen in Fig. 5. A part of a cross-section of the central unit 2 is provided, and a cross-section of one of the conveyor belts 6. Each conveyor belt 6, 7 rotates around two cylinders 20, 21, one of which is driving the conveyor belt 6, 7, so that the conveyor belt 6, 7 has an upper part 22, which is the part of the conveyor belt 6, 7 used for transferring plates. The conveyor belt 6, 7 also has a lower part 23, which is the part of the conveyor belt 6, 7 moving back in the opposite direction as the movement of the plates.

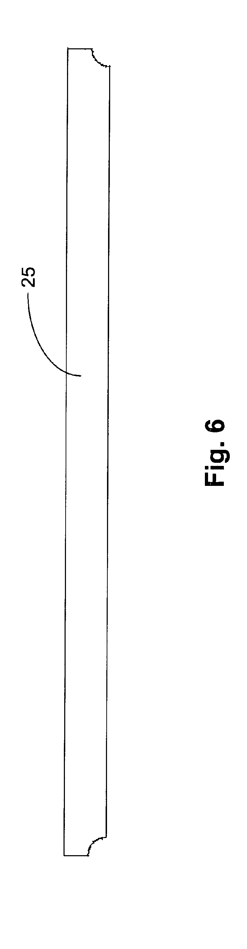

The upper part 22 of the conveyor belt 6, 7 is supported by a first set of side beams 24, for example fixed at regular intervals at the central unit 2, below the upper part 22 of the conveyor belt 6, 7 and extending over the transversal width thereof. On these side-beams 24, racks 25 are mounted, so as to form a grid-like structure. Preferably these racks 25 are made out of plastics material and/or stainless steel, and they help in supporting the belt 6, 7. They are illustrated in Fig. 6. A rack 25 is fixed by clicking between every two neighbouring side beams 24. These racks 25 can be easily demounted, also by clicking, and can then be washed, for example in a dishwasher in order to clean them. The side beams 24 of this first set of side beams are preferably cylindrical in cross-section. A seal 26, for example a silicon seal, is provided between the conveyor belt 6, 7 and the central unit 2 in order to prevent food and liquid to fall into the conveyor belt section 27.

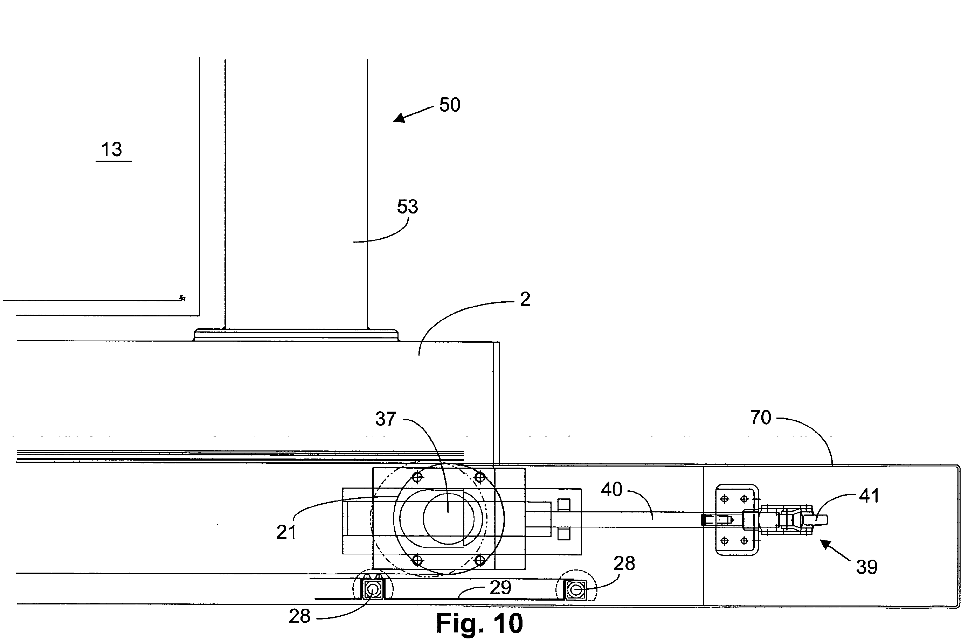

The lower part 23 of the conveyor belt 6, 7 is supported by a second set of side beams 28. These side beams 28 are preferably also placed at regular intervals along the central unit 2, below the lower part 23 of the conveyor belt 6, 7, and they extend over the transversal width thereof. They do not need to be placed with the same distances between every two neighbouring side beams 28 as the distances between the side beams 24. These side beams 28 are preferably rectangular or square in cross-section. They add to the stability of the whole. Furthermore, they can be used as supports for bearing e.g. shallow trays 29 (as shown in Fig. 10). These trays 29 can have a plurality of functions, such as for example aiding in cleaning and/or disinfecting of the belt 6, 7, as explained later on. Alternatively, they can be used for storing spoons or other equipment, for example.

At the front side of the conveyor belt 6, 7, a cover panel 30 is provided (this cover panel 30 is taken away in Fig. 1). This cover panel 30 preferably is C-shaped or inverse C-shaped in vertical cross-section, as can be seen in Fig. 5. A further sealing 31, for example a silicon seal, is also provided between the conveyor belt 6, 7 and this cover panel 30, which sealing 31 also prevents food and/or liquids to enter the conveyor belt section 27.

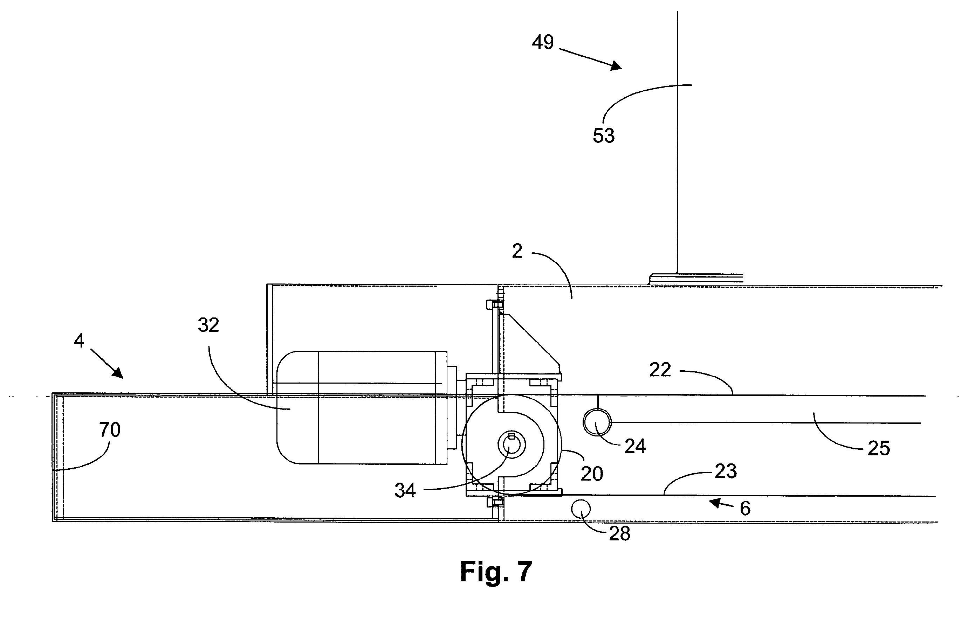

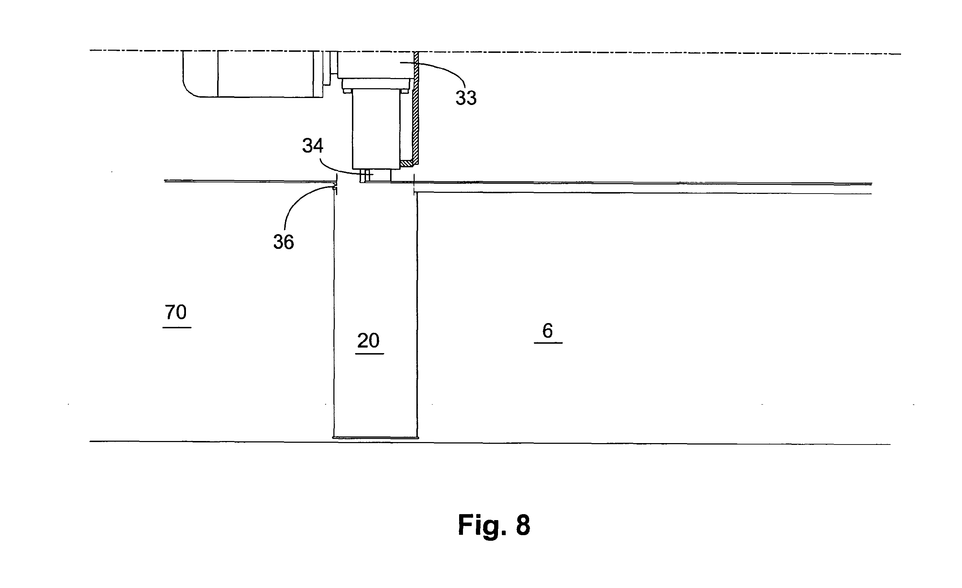

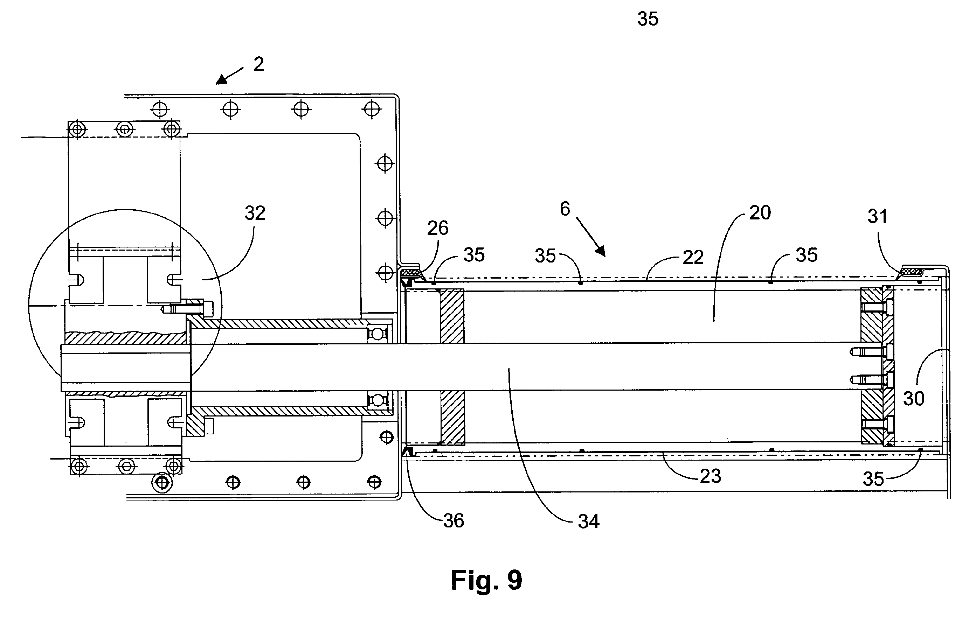

Movement of the conveyor belt 6, 7 is driven by a motor 32 provided in the central unit 2, as illustrated in Fig. 7, Fig. 8 and Fig. 9, which motor 32 is coupled to the drive roll 20 of the conveyor belt 6, 7 by means of a gear box 33. A worm drive may be used for example, which drives an axis 34 for rotation. However, any other speed-transforming transmission may be used which reduces the rotational frequency of the motor 32 and transforms this rotation into a rotation of an axis 34. Over the axis 34 is provided the first cylinder 20, which drives the belt 6, 7. It is possible to have this first cylinder 20 made of rubber or any other material which provides friction between the cylinder 20 and the belt 6, 7. Preferably, the cylinder is made from stainless steel and provided with O-rings 35. Three or four O-rings 35 are sufficient for providing enough friction between the first cylinder 20 and the conveyor belt 6, 7, so as to be able to drive the conveyor belt 6, 7. This embodiment is very hygienic and easy to clean: the O-rings 35 can be taken off and can be washed, e.g. in a dishwasher. Also the first cylinder 20 can be cleaned. Furthermore, a V-seal 36 is provided between the first cylinder 20 and the central unit 2.

At the other end of the belt 6, 7, a similar cylinder 21 is provided on an shaft or axle 37 around which it can turn. This axle 37 is mounted on a carriage 38 connected to locking means 39 for locking and unlocking the carriage 38 at a location, the locking means 39 for example being a tightening rod 40 controlled by a handle 41. When locked, the carriage 38 is in a first position, in which the belt 6, 7 is tightened around the two cylinder rolls 20, 21 and is ready for use. When unlocked, e.g. by moving the handle 41 from a locking position C to an unlocking position U, the carriage 38 moves towards the drive cylinder roll 20, so as to loosen the belt 6, 7. The belt 6, 7 is then ready for being taken off, for both cleaning the belt 6, 7 and the conveyor belt section 27, although in principle there cannot be a lot of dust, dead insects or old food in this space due to the sealing thereof. It is to be noted that no adjustment of the belt 6, 7 or its drive mechanism needs to be carried out when placing the belt 6, 7 back: the belt 6, 7 is tightened by the tension applied by the tightening rod 40 on the carriage 38 and thus on the second cylinder roll 21, i.e. by resilience.

The drive of the belt 6, 7 may be continuous or intermittent.

The table 1 is provided with means for fixing it to the ceiling 42 or to a wall. In what follows, an embodiment is described in which the table 1 is fixed to the ceiling. Alternatively the table 1 may be fixed to a wall. A person skilled in the art may provide a wall fixing based on the following explanation of the ceiling fixing.

Fixing of the table 1 to the ceiling 42 may be done as follows. In first instance, a ground plate 43 is fixed to the ceiling 42. The table 1 is connected to this ground plate 43. An eye 44 is provided, of which a first part 45 is fixed to the ground plate 43 and a second part 46 is fixed to the table 1. Between those two parts, a spring 47 is provided.

The table 1 is not supported by legs, but instead is hanging from the ceiling 42. A bearing structure 48 is provided therefor. In the embodiment represented in the drawings, the bearing structure 48 comprises a plurality, for example two telescopic tubes 49, 50 onto which the table 1 is attached by any suitable means. Each telescopic tube 49, 50 comprises a plurality, for example three with respect to each other retractable parts 51, 52, 53. These tubes 51, 52, 53 are journalled with respect to each other, preferably by means of plastic bearings. O-rings are provided to seal the individual parts 51, 52, 53 of the telescopic tubes 49, 50. The lower retractable part 53 of each telescopic tube 49, 50 is preferably attached to the central unit 2 by fastening means, such as e.g. threaded rods 56. Alternatively, they can be attached by means of screws and bolts from the outside, but this latter solution is less hygienic because it is less easy to clean due to the notches and/or protruding parts. The telescopic tubes 49, 50 allow the working surface 3 to be raised or lowered, in cooperation with a drive unit 57.

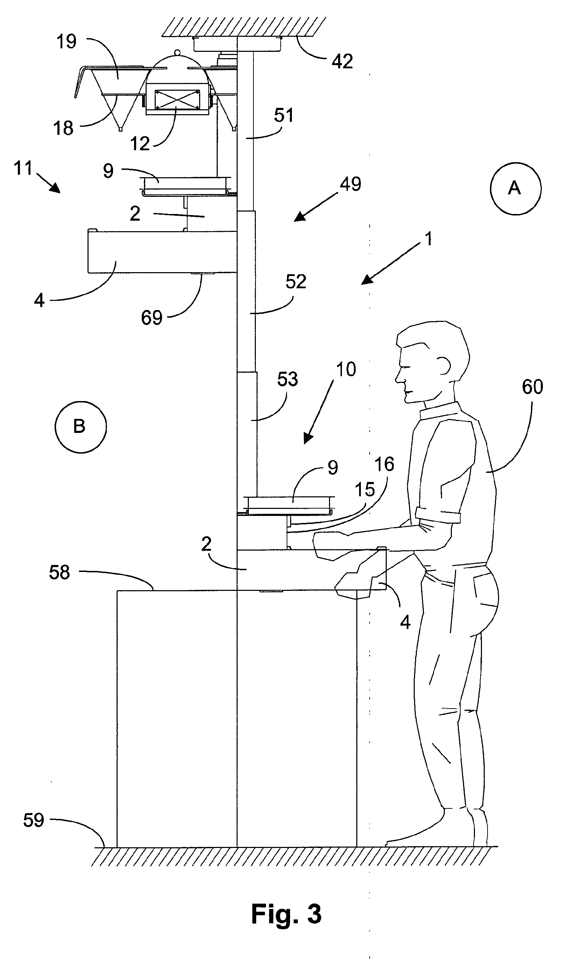

The table 1 is provided with a drive unit 57 for moving the table 1 from a first, working position A, as represented in Fig. 1 and the right hand side of Fig. 3, above a second surface 58, to a second, non-working position B, as represented in the left hand side of Fig. 3, at a higher level above the floor 59, so as to expose the second surface 58. In the first, working position A, this table 1 is at a height suitable for a person 60 to be working at, as shown in the right hand side of Fig. 3. Usually a person 60 is standing next to a table 1 for serving out food. In the second position B, table 1 is removed from the working position A and takes a less or no cumbersome position. This second position B may be straight above the first position A, as shown in Fig. 3, or another position which is more sideways, i.e. which does not only include an upward motion but also a sideward motion. Other moving means are provided for this second embodiment (not represented in the drawings). The whole drive unit 57 is mounted as one piece in the central unit 2. Providing the drive unit 57 in the central unit 2 adds to the compactness of the table 1, as no separate motor block, e.g. underneath the table 1, needs to be provided.

A preferred efficient embodiment is where the table 1, when in the first or working position A, is resting on a fixed table or second surface 58 which is present in the kitchen or is located just above it. When the table 1 is moved from its first position A to its second position B, this second surface 58 is exposed and can be used. When there is no table 58 present underneath the table 1, space becomes freed underneath the table 1, which space can also be used for something else, e.g. provides a thoroughfare. In this embodiment, the table 1 is preferably provided, at its underside with at least one support, for example one or a plurality of legs (not represented in the drawings). This or these support(s) can be folded back and folded out when the table 1 moves up resp. down. This folding back or out of the support(s) can be done either manually or automated. In the latter case, necessary control circuits and devices are provided.

The telescopic tubes 49, 50 are connected to the working surface 2 at positions which are substantially in the middle of the width W of the table 1, the width of the table 1 being measured in a direction perpendicular to the direction of motion of the transferring device, as can be seen on a top view of the table 1 as represented in Fig. 2. In the longitudinal direction L of the table 1, the telescopic tubes 49, 50 are located at positions substantially in the neighbourhood of the extremities of the table 1. Although symmetrical in the embodiment described, it is to be noticed that the telescopic tubes 49, 50 do not need to have symmetrical positions with respect to the midpoint of the table 1.

Power supply cables to the drive unit 57 come down from the ceiling 42 through the telescopic tubes 49, 50. Also power supply cables for the heating unit 12 come down from the ceiling 42 through at least one of the telescopic tubes 49, 50. The heating unit 12 is attached onto supporting pillars 76, as represented in Fig. 4. The power supply cables for the heating unit 12, coming down through one of the telescopic tubes 49, 50, run through the central unit 2 and mount towards the heating unit 12 through at least one of the supporting pillars 76.

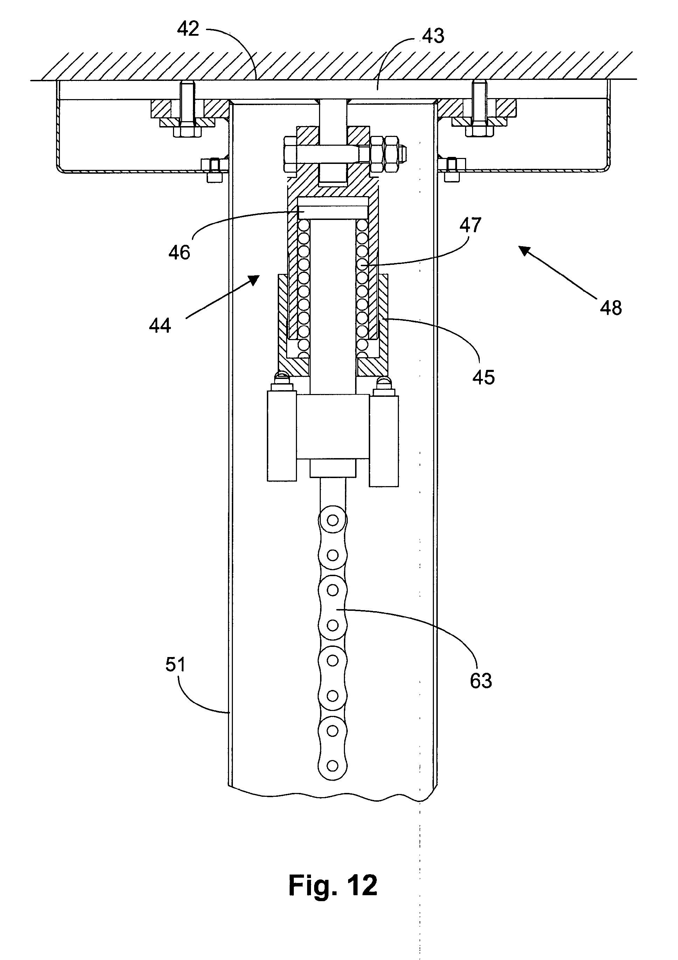

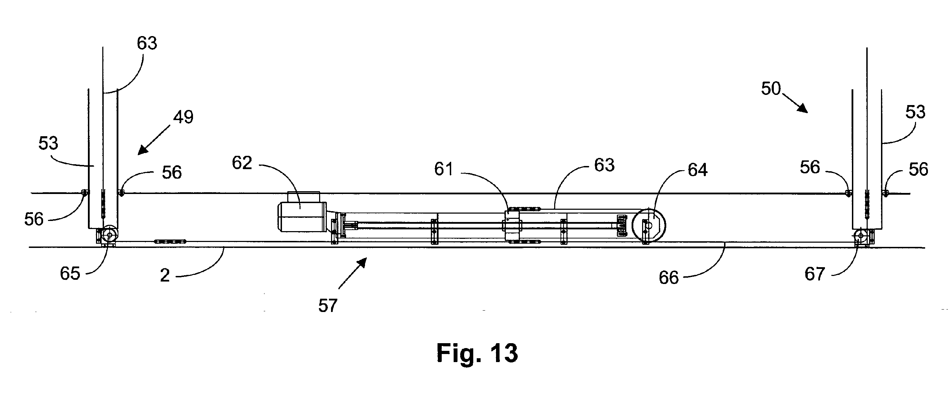

The drive unit 57 for driving the up and down movement of the table 1 can be implemented in several ways. One embodiment is described with respect to Fig. 13. In this embodiment, a carriage 61 is provided connected to a motor 62, more specifically an electromotor. The drive unit 57 is located in the central unit 2. Providing the drive unit 57 in the central unit 2 adds to the compactness of the table 1, as no separate motor block, e.g. underneath the table 1, needs to be provided. A first chain 63 is connected to the carriage 61 at its top side, runs over a first wheel 64, back under the carriage 61, over a second wheel 65 and through the first telescopic tube 49, at the top whereof it is connected to the ceiling 42 according to Fig. 12. A second chain 66 is connected to the carriage 61 at its bottom side, runs over a third wheel 67 and through the second telescopic tube 50, at the top whereof it is connected to the ceiling 42 according to Fig. 12. A control unit sends appropriate drive signals to the motor 62. If the carriage 61 is driven to move to the left, both the first chain 63 and the second chain 66 will be pulled, and the table 1 moves up. If the carriage 61 is driven to move to the right, both the first chain 63 and the second chain 66 will be released, and the table 1 moves down.

According to another embodiment, not represented in the drawings, the drive means 12 comprises a threaded rod which extends through each of the telescopic tubes 49, 50. Each threaded rod is driven by means of a motor. The rotors of both motors for driving the threaded rods are connected to each other by means of an axis, in order to guarantee a synchronous movement of both telescopic tubes.

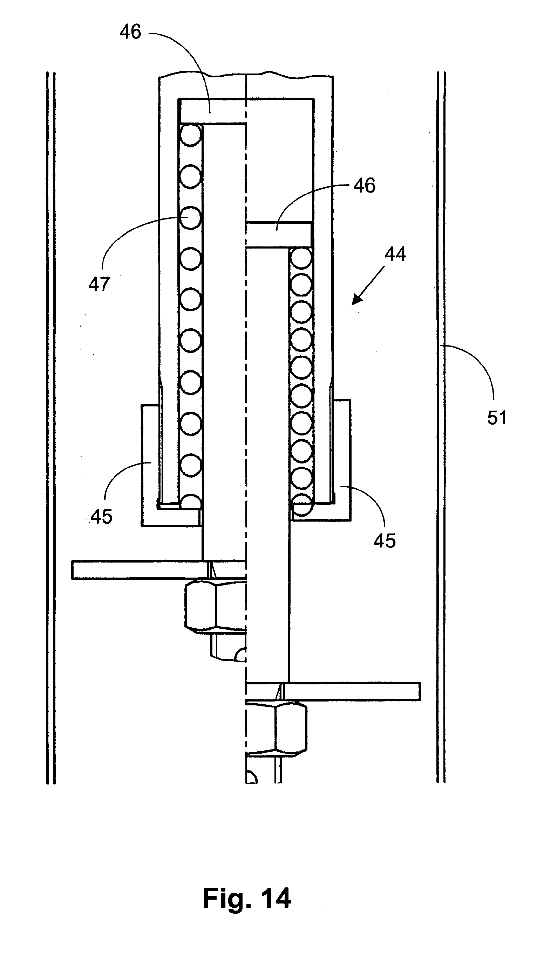

For safety reasons end-of-run switches may be provided, which send signals to the control unit connected to the motor 62. The drive of the upward movement is stopped as soon as one of the chains 63, 66 hangs slackly. The end of run in the downward direction is not defined by the position of the table 1 with respect to the floor 59 or the ceiling 42, but is defined by the counterpressure experienced by the table 1. More specifically, and as illustrated in Fig. 14, a mass 46 and a spring 47 are provided in the suspension of the table 1. When the table 1 is moving down, the mass 46 fixed to the table 1 is moving down as well, thus compressing the spring 47, as can be seen in the right hand part of Fig. 14. As soon as the table 1 rests on a second surface 58 underneath it, the absence of movement of mass 46, or the absence of further compression of spring 47 is detected by a suitable detector, which sends a corresponding signal to a control unit. This control unit sends a stop signal to the drive unit 57, which will halt the motor 62 and thus the downward movement. Provision of such an end-of-run switch is safer than stopping the movement if a predetermined position has been reached, for, if a person or an object would be standing underneath the table 1, the table 1 will stop its downward movement before the person gets hurt or the object gets crushed. Furthermore, necessary devices and circuitry may be provided to detect whether the table 1 stops moving down because it has reached the second surface 58 underneath it and has thus reached its end-of-run position, or whether it stops because it hits a person or another object (i.e. the table 1 stops the movement before the end-of-run position is reached). In the latter case, suitable drive signals may be given to the drive unit 57 for moving up the table 1 again.

Illumination devices 69, for example TL lamps, may be provided at the underside of the central unit 2 of the table 1. These lamps 69 can be used when the table 1 is in its second, non-working position B. At that moment, the lamps 69 can illuminate the exposed second surface 58. A control unit may be provided to automatically switch off these lamps 69 when the table 1 has reached its end-of-run position, or even as soon as the table 1 moves downward. Of those two, the first embodiment is preferred, because then the second surface 58 is illuminated as long as possible. The lamps 69 are preferably sealed to be liquid tight. The holes made in the central unit 2 are big enough to allow access to the motors 32, 62 mounted inside the central unit 2. The whole central unit 2 is, with the lamps 69 in place, sealed hermetically from the outside world. That way, no dust or possibly contaminating fluids such as motor oil for example can leave the central unit 2 and contaminate food. Power supply cables for the lamps 69 come down from the ceiling 42 through one of the telescopic tubes 49, 50.

Also above the working surface 3, illumination devices (not represented in the drawings) may be provided, which illuminate the working surface 3 itself. A control unit may be provided to automatically switch off these lamps as soon as the table 1 moves upward.

Two end cassettes 70 keep all parts together. They are slid over the left and right extremities of the front panel 30 and are connected thereto e.g. by means of four screws of knobs. When unscrewing the end cassettes 70, all parts can be taken off without further screwing and can be cleaned, e.g. successively the end cassettes 70 are taken of, the front panels 30, the belt 6, 7, the racks 25, the cylinders 20, 21, etc..

Detector means (not represented) may be provided, so as to prevent the table 1 from going up as long as objects are lying on the conveyor belts 6, 7 or on the waiting areas 4, 5. Any suitable detector, e.g. an optical detector, may be used.

Furthermore, a counter device (not represented) may be provided, for counting the number of finished plates which come from the conveyor belts 6, 7. This counter device may be a sensor which senses each plate coming from the conveyor belt 6, 7, which sensor sends a corresponding signal to a control unit. The counted number can be displayed on a display unit (not represented in the drawings).

Furthermore, screens (not represented) may be provided for projecting either a picture of a plate as it should finally be, or for projecting intermediate pictures of the meal, so as to show to operators what exactly they have to do at each stage along the table 1 for serving out food, where they have to deposit which ingredients, and about how much or how many. This is particularly useful in kitchens where there are a lot of changes in personnel.

According to one embodiment, a picture of each dish is stored in a memory. When a certain dish has to be served out, an operator selects the right picture from the memory, and this picture is displayed on all the screens along the table 1.

According to another embodiment, the head chef of the kitchen prepares one plate. At the end of the table 1, a picture storing device such as a digital camera is provided. A picture is taken of the exemplary plate made by the head chef, and this picture is projected immediately on all the screens along the table 1.

According to still another embodiment, intermediate pictures of different stages of serving out a dish have been taken and stored in a memory in beforehand, and at the moment of serving out a certain dish, the corresponding set of pictures is selected and projected onto the different screens along the table 1, an appropriate picture being projected at each stage along the table 1, possibly a different picture at each stage.

This may be useful in kitchens of hospitals, for example, where a number of times a first meal has to be prepared, and another number of times another meal, and so on.

A control panel (not represented in the drawings) is provided which comprises a plurality of switches, such as knobs or handles, for controlling a plurality of actions. Either one control panel may be provided, which is located at a position which can always be reached by a person standing on the floor 59. Alternatively, two control panels may be provided, of which one, a stationary control panel, can always be reached by an operator standing on the floor 59, and of which the other, a movable control panel, is mounted on the table 1 and can only be reached when the table 1 is in its working position A. Hereunder, control switches will be described as if two control panels were provided. According to still another embodiment, instead of a stationary and/or a movable control panel, a remote control, for example using IR beams, may be provided. Such remote control may for example be carried in one's pocket, or it may be removably attached onto the table, e.g. by a magnet.

A first set of switches or handles is for the control of the up/down movement of the table 1. Actuating any of these switches sends appropriate signals to a control unit controlling the drive unit 57 for the up/down movement. It may furthermore, optionally, also send drive signals to signalling means, such as for example a visual alarm, such as a rotating light or a flashing light, or an audible alarm, indicating that the table 1 is moving. Preferably this first set of switches is of a kind that needs to be continuously actuated, e.g. pushed or held, as long as the movement needs to go on. This is considered safer: in case something goes wrong, an operator will immediately release the knob or handle and movement stops. This first set of switches is located on the stationary control panel.

A second set of switches is provided for left or right movement of the conveyor belts 6, 7. This set of switches may be provided on the movable control panel. This second set of switches sends appropriate signals to a control unit controlling the drive mechanism of the conveyor belts 6, 7. According to one embodiment, both conveyor belts 6, 7 may be driven by the same drive mechanism, i.e. at the same time and at the same speed. According to another embodiment, both conveyor belts 6, 7 may be driven separately, i.e. they may be driven independently, with different speeds. The second set of switches also comprises switches, e.g. potentiometers, for setting the speed of each of the conveyor belts 6, 7. The conveyor belts 6, 7 may be driven continuously or intermittently. The settings of this second set of switches may be overruled so as to stop all movement of the conveyor belts 6, 7 when the table 1 is moving up or down, or when it is in the high, non-working position B. A control unit is provided therefor, which receives signals from the drive mechanism 57 for driving the moving up and down of the table 1, and which sends corresponding signals to the drive mechanism of the conveyor belts 6, 7.

A third set of switches is provided for switching on or off the illumination 69 for illuminating the second surface 58. This set of switches is provided on the stationary control panel. As already explained above, a control unit may be provided which overrules the settings of the third set of switches in case the table 1 is moving down: in that case lamps 69 are switched off.

A fourth set of switches is provided, on the movable control panel, for switching on or off the illumination for illuminating the workspace 3. Also the settings of these switches may be overruled by a control unit, which sends appropriate signals to the illumination devices for switching them off when the table 1 moves up.

A fifth set of switches is provided for switching the heating devices of the heating unit 12 on or off, and for setting the temperature of each of the heating devices. These switches are preferably provided on the stationary control panel, so that heating devices can be switched on for pre-heating when the table 1 is still in its non-working position B, so as to be hot when the table 1 comes down for being used.

An emergency brake is provided for stopping the movement of the conveyor belts 6, 7 in case the second waiting area 5 gets too full, in order to prevent plates from falling on the floor 59. This emergency brake may be operated by an operator, or it may be operated automatically. In this latter case, a detector for detecting the status of the second waiting area is provided, for example an optical detector, and sends a corresponding status signal to a control unit. This control unit sends a break signal to the drive motor 32 of the conveyor belt if needed.

Furthermore, a general emergency break is provided, for stopping all movement and for switching off all supplementary devices such as e.g. light and heating at any time. This emergency break is provided on the stationary control panel. A supplementary emergency break switch may be provided on the movable control panel, so as to be closer to hand when the table 1 is down. In this case, the movable control panel is preferably located at the side of the table 1, so as to be easily reachable from two sides of the table 1.

Furthermore, it is possible to take away one of the heating devices of the heating unit 12, preferably one at one extremity of the table 1. Instead of this heating device, an access may be provided to electronics which can preferably easily be reached, such as, but not limited to, transformers for the lights and fuses for example.

The use of the table 1 according to the present invention is clear from the above description, but is in short explained once again hereinafter.

When the table 1 for serving out food has to be used, it is lowered by engaging the motor 62 and thus moving in the desired direction the carriage 61 and thus also the chains 63, 66 connected thereto. The table 1 comes down until it hits something underneath it, for example the second surface 58. At that moment, the end of run switch sends signals to a control unit for controlling the switching off of the drive unit 57. Optionally, while being in the high position B, the heating unit 12 of the table 1 could have been switched on in order to preheat it.

To serve out a large number of plates, the conveyor belts 6, 7 are started, and one after one, plates are put at the upstream side of the conveyor belts 6, 7. During transportation of the plates, people standing next to the table 1 serve out food. The completely served out plates are taken away at the downstream side of the conveyor belts 6, 7.

In case the table 1 for serving out food does not need to be used, it is pulled up to a second, non-working position B which is higher than the first, working position A. The space underneath the table 1 for serving out food is freed, for example for carrying out other acts on another, second surface 58, such as a normal table, which is exposed when the table 1 for serving out food is pulled up.

Cleaning of the table 1 for serving out food according to the present invention is facilitated. All parts can be easily taken apart.

In a first step, screws are turned loose at the left and the right hand sides, and the end cassettes 70 are taken away. Thereafter, the front plates 30 are taken away. The handle 41 is switched over in order to take away the tension on the conveyor belt 6, 7, and the belt 6, 7 is taken off. This can be done by one person. The racks 25 are taken out by clicking. The first side beams 24 and second side beams 28 are taken out, the cylinders 20, 21, and every single piece is cleaned.

All parts can be easily cleaned with soap, for example in an (industrial) dishwasher. They can furthermore be disinfected by any suitable means.

Cleaning of the belt 6, 7 during use can be done by providing mechanical surface cleaning means such as a turning brush (not represented in the drawings) and/or a scraping device 71 which touch the turning conveyor belt 6, 7 and so remove food parts sticking on the belt surface.

The turning of the brush may be driven by the turning of the belt 6, 7 itself. The brush may be a dry brush. Alternatively, the brush may be provided with an inlet of cleansing fluid, in which case the belt 6, 7 is cleaned by cleansing fluid being brushed over the belt surface. In this case, an exit for dirty cleansing fluid must be provided. This can for example be done by catching the dirty cleansing fluid in one of the trays 29 supported by the second beams 28, which tray is provided with an exit for the liquid.

The scraping device 71 may comprise a scraper 72 mounted on a cylindrical pipe 73, onto which also a mass 74 is mounted. The scraper preferably has a wedge-shaped tip for scraping parts from the surface of the conveyor belt 6, 7. The cylindrical pipe 73 fits over a protruding part 74 on the central unit 2, and can rotate thereabout. The scraper 73 is always pushed against the surface of the conveyor belt 6, 7 due to gravitational forces on the mass 74, which pull the scraper 72 in the good direction. Also the scraping device can easily be taken off the protruding part 74, and can be washed e.g. in a dishwasher. A scraping device 71 may be provided both at the drive roll 20 of the conveyor belts 6, 7 and at the second cylinder 21 of the conveyor belts 6, 7. This means that for example four scraping devices 71 may be provided in the table 1.

According to an embodiment of the invention (not represented in the drawings), the cover panel 30 may be provided with cut-outs through which a shallow tray 29, preferably a shallow tray 29 underneath a scraping device 71, can be taken out, for example drawn out, without having to take off the cover panel 30. This facilitates intermediate emptying and cleaning of these shallow trays 29.

Furthermore, or alternatively, liquid surface cleaning means may be provided, e.g. the belt 6, 7 can be cleaned by spraying onto it products based on alcohol, which easily evaporate. This can be done automatically, during use of the table 1 and its conveyor belts 6, 7. Such a spraying device (not represented in the drawings) can be installed instead of one of the shallow trays 29.

The belt 6, 7 may also be cleaned and disinfected by radiation disinfecting means, such as optical surface cleaning means, such as a UV cleaner, i.e. cleaning with ultraviolet (UV) light. The surface of the conveyor belts 6, 7 is irradiated with UV light generated by a UV light source (not represented in the drawings). UV light decomposes organic molecules. UV disinfection can be done while using the table, as well as after having used the table.

Thorough cleaning of the table 1 after use may be done as follows. One of the end cassettes 70 is taken off, and a cleaning cassette (not represented in the drawings) is slid in its place. This cleaning cassette is provided with a liquid supply such as water or soap or disinfecting solution supply and a corresponding discharge means for evacuating used liquid. A brush or other cleaning means is provided for actively cleaning the surface of the conveyor belts 6, 7. The conveyor belts 6, 7 are driven to obtain this.

It is an advantage of the table according to the present invention that it does not contain dead spaces which cannot easily be reached, and in which insects, bacteria or other microbes could multiply or from which old and contaminated or rotten food could fall down into the kitchen.

It is to be understood that although preferred embodiments, specific constructions and configurations, as well as materials, have been discussed herein for devices according to the present invention, various changes or modifications in form and detail may be made without departing from the scope and spirit of this invention. For example, other bearing systems and/or drive mechanisms may be provided to move the working surface, especially when the table 1 for serving out food is not fixed to the ceiling 42 but rather to a wall.

## Claims

1. A table (1) for serving out food, the table having a first working surface (3), wherein the first working surface (3) comprises a transferring device (6, 7) for transferring food receptacles from one end of the table (1) to an opposite end of the table (1), and wherein the table (1) is provided with a drive unit (57) for moving the table (1) from a first working position (A) between floor (59) and ceiling (42) of a room, to a second non-working position (B) at a higher level between the floor (59) and ceiling (42) of the room than the first position (A).

2. A table (1) according to claim 1, wherein a second working surface (58) is exposed when the table (1) is moved to the second position (B).

3. A table (1) according to any of the previous claims, wherein the transferring device comprises at least one conveyor belt (6, 7).

4. A table (1) according to claim 3, wherein the transferring device comprises 2 conveyor belts (6, 7) adjacent each other.

5. A table (1) according to any of the previous claims, furthermore comprising a bearing structure (48) with fastening means (43) for fastening the table (1) to the ceiling (42) or a wall of the room.

6. A table (1) according to claim 5, wherein the bearing structure (48) comprises at least one telescopic tube (49, 50).

7. A table (1) according to any of the previous claims, furthermore comprising cleaning means for cleaning the first working surface (3).

8. A table (1) according to claim 7, wherein the cleaning means comprises a mechanical surface cleaning means such as a scraping device (71) for scraping food from the first working surface (3).

9. A table (1) according to any of the previous claims, furthermore comprising disinfecting means for disinfecting the first working surface (3).

10. A table (1) according to claim 9, wherein the disinfecting means comprises a UV radiation unit.

11. A table (1) according to claim 9, wherein the disinfecting means comprises a disinfectant spraying unit.

12. A table (1) according to any of claims 2 to 11, furthermore comprising light sources (49) so as to illuminate the second surface (58) when being in the second non-working position (B).

13. A table (1) according to any of the previous claims, furthermore comprising a heating unit (12) for heating at least part of the first working surface (3).
